Europäisches Patentamt

European Patent Office

Office européen des brevets

(11) Veröffentlichungsnummer : **0 062 104**
**B1**

(12) **EUROPÄISCHE PATENTSCHRIFT**

(45) Veröffentlichungstag der Patentschrift :
30.01.85

(51) Int. Cl.⁴ : **G 03 G 15/20, G 01 N 29/02**

(21) Anmeldenummer : **81108931.7**

(22) Anmeldetag : **26.10.81**

(54) **Einrichtung zur Überwachung der Konzentration eines Luft-Dampf-Gemisches.**

(30) Priorität : **26.03.81 DE 3112002**
**26.03.81 DE 3111970**

(43) Veröffentlichungstag der Anmeldung :
**13.10.82 Patentblatt 82/41**

(45) Bekanntmachung des Hinweises auf die Patenterteilung : **30.01.85 Patentblatt 85/05**

(84) Benannte Vertragsstaaten :
**AT BE CH FR GB IT LI LU NL SE**

(56) Entgegenhaltungen :
**DE-A- 2 363 757**
**DE-B- 2 024 882**
**US-A- 3 049 810**

(73) Patentinhaber : **Siemens Aktiengesellschaft**
**Berlin und München Wittelsbacherplatz 2**
**D-8000 München 2 (DE)**

(72) Erfinder : **Winter, Hans, Dipl.-Ing.**
**Wendl-Dietrich-Strasse 8**
**D-8000 München 19 (DE)**
Erfinder : **Mair, Eduard**
**Allgäuer Strasse 79/II**
**D-8000 München 71 (DE)**
Erfinder : **Schönewolf, Holger, Dipl.-Ing.**
**Mergenthaler Strasse 13**
**D-8000 München 60 (DE)**

## Beschreibung

Die Erfindung bezieht sich auf eine Einrichtung zur Überwachung der Konzentration eines Luft-Dampf-Gemisches bei einem Druck- oder Kopiergerät, insbesondere zur Überwachung der Konzentration von Lösungsmitteldampf in der Fixierstation eines nichtmechanischen Druck- oder Kopiergerätes gemäß dem Oberbegriff des Anspruchs 1.

Durch die US-A-3 049 810 ist bekannt, die auf einer Papierbahn aufgebrachten Tonerbilder in der Fixierstation einer Druck- oder Kopiervorrichtung mit Hilfe von Lösungsmitteldampf zu fixieren. Der Dampf aus Freon und Methylenchlorid löst den Toner auf, so daß er in das Papier eindringen kann. Die entsprechend ausgeführte Fixierstation kann z. B. aus einem Behälter oder Gehäuse bestehen, in der eine Verdampfungsstelle angeordnet ist, durch die das Lösungsmittel in Dampfform umgewandelt wird. Die Papierbahn wird durch das Gehäuse hindurchgeführt und innerhalb des Gehäuses dem Lösungsmitteldampf ausgesetzt. Eine vor der Behälteröffnung angebrachte Kühlfalle verhindert das Entweichen von Lösungsmitteldampf in die Umgebung.

Eine einwandfreie Fixierung der Tonerbilder auf der Papierbahn wird aber nur dann erreicht, wenn der Lösungsmitteldampf eine bestimmte Konzentration hat. Aus diesem Grunde muß mit Hilfe einer Meßanordnung die Konzentration des Lösungsmitteldampfes festgestellt werden.

Es ist ferner bekannt, daß die Laufzeit eines Ultraschallsignals von der Konzentration eines Dampfes in Luft abhängt. Eine Vorrichtung zum Messen physikalischer Eigenschaften eines Mediums mit einem elektroakustischen Wandler, der sowohl zum Aussenden einer Ultraschallschwingung als auch zum Empfangen der an einem Reflektor reflektierten Ultraschallschwingung dient, ist in der DE-B-20 24 882 beschrieben. Die bekannte Vorrichtung enthält eine Schaltungsanordnung zur Rückkopplung der in ein elektrisches Signal zurückverwandelten reflektierten Ultraschallschwingung auf den Oszillator zur Erzeugung der elektrischen Schwingung mit Ultraschallfrequenz. Die Oszillatorfrequenz hängt dann von der Laufzeit des akustischen Signals und damit bei fest vorgegebenen räumlichen Bedingungen von den physikalischen Eigenschaften, z. B. von der Konzentration eines Luft-Dampf-Gemisches ab.

Es ist auch möglich, nach dem Echolotprinzip eine kurzzeitige Ultraschallschwingung auszusenden und den zeitlichen Abstand zwischen deren Beginn und dem Eintreffen des reflektierten Empfangsimpulses zu messen. Zeitmessung bedeutet, abhängig von dem gewünschten Auflösungsvermögen, mehr oder weniger kleine Zeitintervalle zu definieren bzw. zu erzeugen und die Anzahl der zwischen den zwei maßgebenden Ereignissen verstrichenen Zeitintervalle zu zählen. Bei Verwendung elektronischer Mittel wird demgemäß ein Takt erzeugt und die Anzahl der innerhalb der zu messenden Zeitspanne aufgetretenen Taktimpulse mit Hilfe einer Zählschaltung, z. B. eines Binärzählers, aufaddiert.

Das dem Mischungsverhältnis des Luft-Dampf-Gemisches in der Fixierstation eines Druck- oder Kopiergerätes entsprechende Zählergebnis muß in mindestens drei Bereiche eingeordnet werden, wobei der mittlere Bereich die gewünschte Konzentration einschließlich zulässiger Toleranzen bezeichnet und die äußeren Bereiche bei einer unzulässig niedrigen bzw. hohen Konzentration erreicht werden. Eine Unterteilung in mehrere Bereiche kann zweckmäßig sein.

Zur Aufrechterhaltung der gewünschten Dampfkonzentration ist ein rasch ansprechendes Regelsystem notwendig, das bei Bedarf die Nachförderung von flüssigen Fixiermitteln zu einer Verdampfungsstelle in Form einer erhitzten Bodenplatte veranlaßt.

Im Betrieb können jedoch vorübergehende Störungen auftreten, die zu einer unterschiedlichen Dichte des Fixiermitteldampfes führen. Ursachen dafür sind beispielsweise :

a) Die Bildung von Schwaden durch spontanes Verdampfen beim Einspritzen von Lösungsmitteln,

b) Wärmeschichtungen zwischen der erhitzten Verdampfungsstelle und der Kühlfalle,

c) Turbulenzen durch die bewegte Papierbahn.

Die zumeist kurzzeitigen und räumlich begrenzten Störungen der homogenen Verteilung des Lösungsmitteldampfgemisches haben auf die Fixierqualität nur einen vernachlässigbar geringen Einfluß, da sich über die längere Fixierstrecke die örtlich unterschiedliche Einwirkung des Lösungsmittels ausgleicht.

Dagegen können solche Störungen die Messungen der Dampfkonzentration erheblich beeinträchtigen. Insbesondere können durch örtliche Schwankungen der Dampfkonzentration Beugungen der Ultraschallwelle verursacht werden, die zu Interferenzen führen. Diese wiederum können das Echo ganz oder teilweise auslöschen oder durch gegenphasige Erregung verschiedener Bereiche der schallaufnehmenden Fläche des Ultraschallwandlers die Erzeugung brauchbarer elektrischer Empfangsimpulse verhindern. Einzelmessungen täuschen daher leicht ein Über- oder Unterschreiten der vorgegebenen Grenzwerte vor, obgleich die mittlere Dampfkonzentration noch in dem gewünschten Bereich liegt.

Der Erfindung liegt die Aufgabe zugrunde, eine Einrichtung zur Überwachung der Dampfkonzentration eines Luft- Dampf-Gemisches anzugeben, bei der eine Schaltungsanordnung zur Erzeugung von verschiedenen Konzentrationsbereichen entsprechenden Signalen vorgesehen ist und bei der die Wahrscheinlichkeit für die Einleitung an sich falscher Reaktionen infolge der genannten Störeinflüsse wesentlich verringert wird. Zur Lösung dieser Aufgabe dienen die Merkmale im kennzeichnenden Teil des Anspruchs 1.

Im folgenden wird die Erfindung anhand von Ausführungsbeispielen unter Zuhilfenahme der Zeichnung näher beschrieben. Es zeigt darin :

Figur 1 ein Blockschaltbild der Einrichtung zur Bestimmung der Lösungsmitteldampfkonzentration,

Figur 2 eine erste Schaltungsanordnung zur Anwahl der Zustandsspeicher,

Figur 3 ein Schaltnetz zur Erzeugung des Sendeimpulses und eines Steuersignales,

Figur 4 eine zweite Schaltungsanordnung zur Anwahl der Zustandsspeicher,

Figuren 5 und 6 eine weitere Schaltungsanordnung zur Anwahl der Zustandsspeicher,

Figur 7 den Aufbau einer Meßsonde.

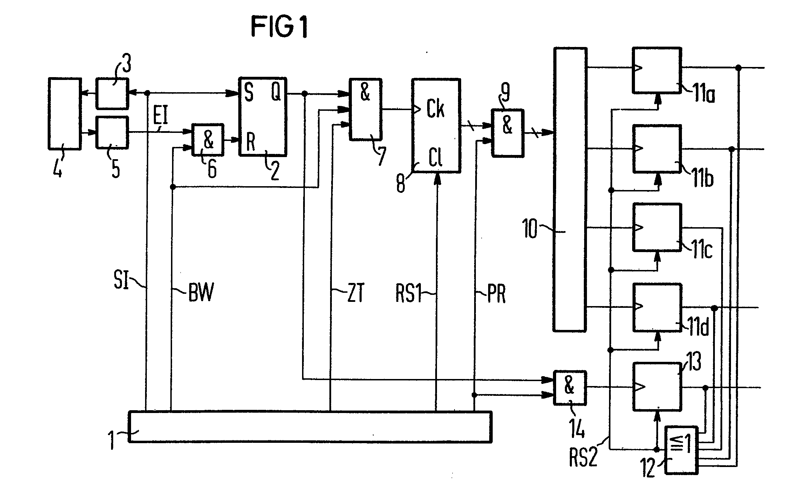

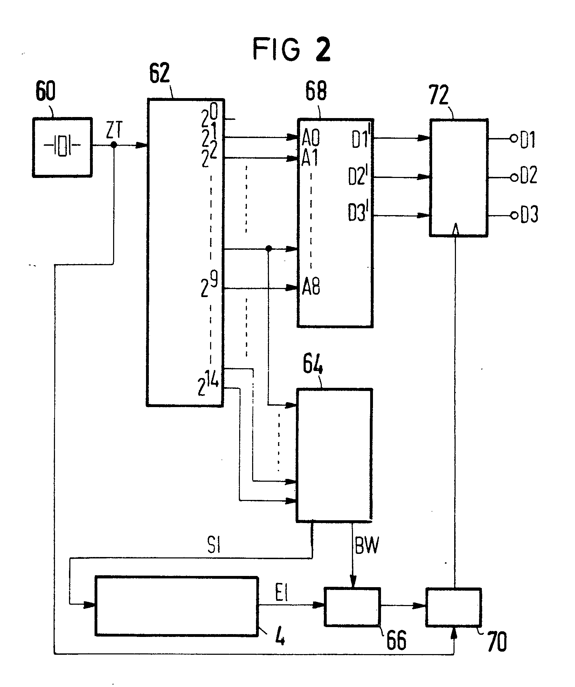

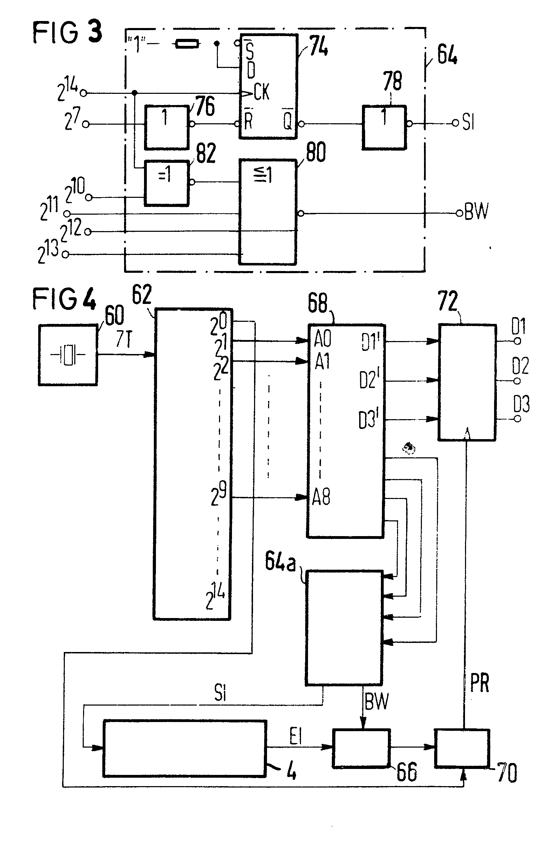

Ein Taktgenerator 1 nach Fig. 1 enthält einen Oszillator 25 zur Erzeugung einer hochfrequenten Zähltakt-Impulsfolge, einen Binärzähler sowie ein logisches Schaltnetz zur Ableitung bestimmter Steuersignale, die im weiteren noch näher behandelt werden (Fig. 2, 3). Die von dem vorzugsweise quarzstabilisierten Quarzoszillator gelieferten Zähltakt-Impulse mit einer Periodendauer von beispielsweise einer μs schalten den Binärzähler fortlaufend bis zum Erreichen des maximalen Zählerstandes 1 ... 11 weiter, so daß ein folgender Eingangsimpuls den Zählerstand 0 ... 00 erzeugt. Dieser oder der nächstfolgende Übergang definiert den Beginn eines Sendeimpulses SI, der etwa 128 μs andauert. Der Sendeimpuls SI setzt ein Flip-Flop 2 und tastet eine in einem Impulsgenerator 3 erzeugte Schwingung mit Ultraschallfrequenz (z. B. 200 kHz) auf. Die elektrische Schwingung wird durch den Ultraschallwandler einer Meßsonde 4 in ein akustisches Signal umgeformt, das die Meßstrecke durchläuft, an deren Ende reflektiert wird und nach einer von der Lösungsmitteldampfkonzentration abhängigen Laufzeit wieder am Ultraschallwandler eintrifft. Nach Umwandlung in ein elektrisches Signal bildet eine Umsetzerschaltung 5 daraus einen digitalen Empfangsimpuls E1, der das Flip-Flop 2 wieder zurücksetzt. Das ist aber nur möglich, wenn der Empfangsimpuls in einem Bewertungszeitraum entsteht, der beispielsweise 1024 μs nach dem Beginn des Sendeimpulses SI beginnt und nach weiteren 1024 μs wieder endet. Der Bewertungszeitraum ist durch ein vom Taktgenerator 1 ausgegebenes Signal BW definiert. Das Signal BW steuert eine Torschaltung 6, die den Empfangsimpuls EI, abhängig von seiner zeitlichen Lage durchläßt oder sperrt.

Das Signal BW zur Festlegung des Bewertungszeitraums und das Signal am Ausgang Q des Flip-Flops 2 steuern mit Hilfe des UND-Glieds 7 die Durchschaltung eines Zähltaktes ZT auf einen weiteren Binärzähler 8, im folgenden als Taktimpulszähler bezeichnet. Der Impulsabstand des gleichfalls durch den Taktgenerator 1 erzeugten Zähltaktes ZT bestimmt das Auflösungsvermögen der Meßeinrichtung und ist im allgemeinen mit 2 μs genügend klein. Die Steuerung des Zähltaktes ZT durch das Signal BW kann auch entfallen, doch vergrößert sich dann das erforderliche Zählvolumen des Binärzählers 8. Mit den vorher angegebenen Werten für Beginn und Ende des Bewertungszeitraums ergäbe sich eine Verdopplung des Zählvolumens.

Der beim Eintreffen eines Empfangsimpulses EI erreichte Zählerstand des Binärzählers 8 ist ein Maß für die akustische Laufzeit des Ultraschallsignals und damit auch ein Maß für die gerade herrschende Lösungsmitteldampfkonzentration. Der Zählerstand entspricht der Gesamtlaufzeit, wenn die Durchschaltung des Zähltaktes ZT nur durch das Flip-Flop 2 gesteuert wird. Im Fall der zusätzlichen Steuerung durch das Signal BW muß zu der aus dem Zählerstand ermittelten Zeit noch die Zeit vom Beginn des Sendeimpulses SI bis zum Beginn des Bewertungszeitraums hinzugerechnet werden. Für die Feststellung der Dampfkonzentration spielt das jedoch keine grundsätzliche Rolle, da die zweite Zeitspanne konstant ist und nur die den einzelnen Zählerständen zugeordnete Bedeutung entsprechend anzupassen ist.

Eine Torsteueranordnung 9, die entsprechend der Stufenzahl des Binärzählers 8 aus mehreren durch ein Übergabesignal PR gesteuerten UND-Gliedern besteht, schaltet die den Zählerstand kennzeichnende Information auf eine Wähleinrichtung 10 durch. Anschließend oder vor der Aussendung eines neuen Sendeimpulses SI wird der Binärzähler 8 durch einen Impuls RS1 zurückgesetzt.

Die Wähleinrichtung 10, deren Aufbau weiter unten beschrieben wird, hat die Aufgabe, die innerhalb des Bewertungszeitraums möglichen Zählerstände in drei oder vier Bereiche einzuteilen und entsprechend dem jeweils erreichten Zählerendstand einen von drei bzw. vier Zustandsspeichern auszuwählen. Dem Ausführungsbeispiel nach Fig. 1 sind vier Zustandsspeicher 11a bis 11d zugrundegelegt, die bestimmte, vorzugsweise gleiche Speicherkapazitäten besitzen. Bei jeder Anwahl eines Zustandsspeichers wird dessen Restkapazität um 1 Bit verringert. Derjenige Zustandsspeicher, dessen Kapazität zuerst erschöpft ist, gibt ein Ausgangssignal ab, das über ein ODER-Glied 12 ein Signal RS2 zum Rücksetzen aller Zustandsspeicher 11a bis 11d erzeugt und gegebenenfalls eine vorbestimmte Reaktion hervorruft. Die Zustandsspeicher 11a bis 11d bestehen vorzugsweise aus mehrstufigen Binärzählern.

Den einzelnen Zustandsspeichern bzw. deren Ausgangssignalen sind beispielsweise folgende Bedeutungen zugeordnet :

11a : Konzentration unzulässig klein, Drucker stoppen,

11b : Konzentration zu niedrig, mehr Lösungsmittel zuführen,

11c : Konzentration im Sollbereich (keine Reaktion),

11d : Konzentration zu hoch, Drucker stoppen.

Ein weiterer Zustandsspeicher 13 wird über ein UND-Glied 14 angewählt, wenn während des Bewertungszeitraums kein Empfangsimpuls EI registriert wurde und demgemäß das Flip-Flop 2 noch gesetzt ist. Ein Ausgangssignal des Zustandsspeichers 13 setzt ebenfalls alle Zustandsspeicher 11a bis 11d und 13 zurück und veranlaßt das Anhalten des Druckers. Es kann mit hoher Wahrscheinlichkeit angenommen werden, daß ein Defekt der Meßsonde vorliegt.

Die Bereitstellung der Zustandsspeicher 11a bis 11d und 13 hat den Zweck, die Auslösung von Reaktionen als Folge der Ergebnisse von Einzelmessungen zu verhindern. Aufgrund der eingangs genannten Störeinflüsse können nämlich Falschmessungen auftreten. Messergebnisse mit starken Streuungen werden jedoch auf mehrere Zustandsspeicher verteilt abgelegt, so daß die Ausgabe eines eine Reaktion auslösenden Ausgangssignals im allgemeinen solange verzögert wird, bis wieder eindeutige Konzentrationswerte vorliegen. In diesem Fall wird nur noch ein Zustandsspeicher aufgefüllt und ein entsprechendes Ausgangssignal entsteht relativ rasch. Durch eine spezielle Ausbildung der Meßsonde kann darüber hinaus die Entstehung von Falschmessungen schon weitgehend vermieden werden.

Eine einfache Möglichkeit zur Realisierung der Wähleinrichtung 10 besteht in der Verwendung eines programmierbaren Festwertspeichers. Eine solche Lösung zeigt Fig. 2-4. In diesen Figuren ist auch der Aufbau des Taktgenerators 1 nach Fig. 1 dargestellt. Ein Oszillator 60 erzeugt den Zähltakt ZT mit einer Periode von beispielsweise der Mikrosekunde. Der Zähltakt ZT liegt am Zähleingang eines Binärzählers 62 an. Der Binärzähler 62 mit 15 Zählstufen $2^0$ bis $2^{14}$ wird ohne spezielle Rückstellung betrieben, so daß auf einen Zählerstand 1 ... 11 ein Zählerstand 0 ... 00 folgt. Der Übergang auf den Zählerstand 0 ... 01 wird als der jeweils erste Zählschritt definiert. Erste Zählschritte haben unter den dem Ausführungsbeispiel zugrundegelegten Bedingungen somit einen zeitlichen Abstand von ungefähr 32 ms. Den gleichen Abstand erhalten dabei auch die einzelnen Sendeimpulse SI.

Die Sendeimpulse SI werden mit Hilfe eines Teils eines Schaltnetzes 64 gewonnen, dessen Eingänge mit den Ausgängen einiger Zählstufen des Binärzählers 62 verbunden sind. Die einzelnen Verbindungen hängen von der gewünschten Dauer des Sendeimpulses SI ab, die in einem bestimmten Anwendungsfall 128 μs beträgt.

Ein zweiter Teil des Schaltnetzes 64 dient zur Ableitung des Steuersignals BW zur Steuerung einer Torschaltung 66 für den Empfangsimpuls EI. Das gleichfalls mit Hilfe von Zählerständen erzeugte Steuersignal BW bestimmt in jedem Zählerdurchlauf einen Zeitraum, in dem Empfangsimpulse EI bewertet werden. Außerhalb des Bewertungszeitraums oder Meßfensters allenfalls eintreffende Empfangsimpulse werden nicht berücksichtigt. Von Beginn des Sendeimpulses an gerechnet, beginnt der Steuerimpuls BW beispielsweise nach 1 024 μs und endet nach 2 048 μs.

Eine von mehreren Möglichkeiten für die Ausbildung des Schaltnetzes 64 zur Herleitung des Sendeimpulses SI und des Steuersignals BW zur Bestimmung des Bewertungszeitraums zeigt die Fig. 3. Die Schaltungsanordnung geht davon aus, daß invertierte Ausgangssignale der Zählstufen des Binärzählers 62 (Fig. 2) nicht verfügbar sind.

Die Teilschaltung zur Erzeugung des Sendeimpulses SI besteht im wesentlichen aus einem D-Flip-Flop 74, dessen Takteingang CK mit dem Ausgang der Zählstufe $2^{14}$ des Binärzählers 62 verbunden ist. Der Setzeingang $\overline{S}$ und der Dateneingang D sind an ein der binären « 1 » entsprechendes festes Potential angelegt. Der Rücksetzeingang $\overline{R}$ des D-Flip-Flop 74 wird durch das mit Hilfe eines Inverters 76 invertierte Ausgangssignal der Zählerstufe $2^7$ gesteuert. Das am Ausgang $\overline{Q}$ des D-Flip-Flops 76 abgenommene Signal wird durch eine invertierende Treiberstufe 78 verstärkt und bilden dann den Sendeimpuls SI.

Zur Erzeugung der Steuersignals BW dient ein NOR-Glied 80, dessen Eingänge mit den Ausgängen der Zählstufen $2^{11}$, $2^{12}$ und $2^{13}$ direkt und mit den Ausgängen der Zählstufen $2^{10}$ und $2^{14}$ über ein NAND-Glied 82 verbunden sind.

Die Ausgänge der niederwertigen Zählstufen des Binärzählers 62 sind mit den Adresseineingängen eines Festwertspeichers 68 verbunden, wie wieder der Fig. 2 zu entnehmen ist. Weiter ist ersichtlich, daß der Adresseneingang A0 mit dem Ausgang der Zählstufe $2^1$, der Adresseneingang A1 mit dem Ausgang der Zählstufe $2^2$ usw. verbunden sind. Damit ergibt sich eine Adressenänderung nach jedem zweiten Impuls des Zähltaktes ZT. Unter den angegebenen Voraussetzungen beträgt das Auflösungsvermögen der Meßeinrichtung somit 2 μs.

Bei dem Ausführungsbeispiel wird der Binärzähler 62 gleichzeitig als Taktimpulszähler 8 als auch als Binärzähler des Taktgenerators 1 nach Fig. 1 verwendet. Dadurch wird eine Vereinfachung der Schaltung erreicht.

Als Festwertspeicher 68 kann jeder handelsübliche Baustein mit einem ausreichenden Adressenumfang und mit mindestens drei parallelen Ausgängen verwendet werden. Sein Inhalt kann fest oder veränderbar sein. Gegebenenfalls müssen der Zähltakt oder die Ausgangsimpulse der Stufe $2^0$ des Binärzählers 62 als Lesetakt anliegen. Im Ausführungsbeispiel ist als Festwertspeicher ein Baustein mit einer Kapazität von 512 × 8 bit eingesetzt. Der Adressenumfang beträgt also $2^9$ Adressen. Da ein Adressenwechsel alle 2 μs erfolgt, dauert der Aufruf sämtlicher Adressen 1 024 μs. Das ist aber gerade die Zeitspanne zwischen dem Beginn des Sendeimpulses SI und dem Anfang des Bewertungszeitraums ebenso wie die Dauer des Bewertungszeitraums selbst. Das bedeutet, daß während des Bewertungszeitraums alle Speicheradressen ein zweites Mal vollständig durchlaufen werden. Das ist jedoch keine notwendige Bedingung, vielmehr kann der Bewertungszeitraum auch kürzer sein.

Von den an sich verfügbaren Ausgängen des Festwertspeichers 68 sind nur die Ausgänge D1', D2' und D3' benutzt. Der Speicherinhalt ist so festgelegt, daß für alle Adressen eines Adressenbereiches der Ausgang D2' eine logische « 1 » und die Ausgänge D1', D3' eine logische « 0 » führen. In dem unteren bzw. oberen Adressenbereich wechselt die logische « 1 » auf die Ausgänge D1' bzw. D3' über, während die jeweils übrigen Ausgänge die logische « 0 » führen. Selbstverständlich ist zur Festlegung der drei verschiedenen Zustände auch eine andere Codierung möglich.

Mit dem Beginn des Empfangsimpulses EI (sofern er in den Bewertungszeitraum fällt) wird die an den Ausgängen D1' bis D3' des Festwertspeichers 68 anliegende Information in ein Register 72 übernommen. Abhängig von der technischen Ausbildung des Festwertspeichers 68 und des Registers 72 kann es für eine zuverlässige Informationsübergabe vorteilhaft oder notwendig sein, den Empfangsimpuls mit dem Zähltakt ZT oder mit den Ausgangsimpulsen der Stufe 2° des Binärzählers 62 zu synchronisieren. Hierzu dient eine Synchronisierschaltung 70 beispielsweise ein D-Flip-Flop. An den Ausgängen des Registers 72 steht die die Dampfkonzentration kennzeichnende Information einen Meßzyklus lang zur Verfügung.

Beachtet man, daß die jeweilige Adresse des Festwertspeichers 68 eine Funktion der seit dem Beginn des Sendeimpulses SI abgelaufenen Zeit ist und der Zeitpunkt der Informationsübernahme in das Register 72 von der Laufzeit des Ultraschallsignales und damit von der zu überwachenden Konzentration des Luft-Dampf-Gemisches abhängt, dann läßt sich für jeden bestimmten Anwendungsfall die Lage und Größe des mittleren Adressbereichs aus dem Sollwert und den zulässigen Toleranzen der Dampfkonzentration leicht festlegen.

Anstelle einer Unterteilung der Speicheradressen in drei Bereiche können auch mehrere, z. B. fünf Bereiche, gewählt werden. Beispielsweise könnten Laufzeiten des Ultraschallsignals, die mit dem Aufruf von Adressen der beiden äußersten Bereiche zusammenfallen, eine sofortige Abschaltung des Druck- oder Kopiergeräts auslösen.

Der Einsatz eines Festwertspeichers für die Festlegung bestimmter Bereiche der Laufzeit der Ultraschallsignale und damit der Konzentration des Lösungsmitteldampfes hat den Vorteil der einfachen Anpassung an veränderte Bedingungen durch Umprogrammierung oder Auswechseln der Speicherbausteine.

Mit den angegebenen Bemessungsvorschlägen der anhand der Fig. 2 beschriebenen Schaltungsanordnung entsteht die vergleichsweise lange Pause von ungefähr 30 ms zwischen dem Ende des Bemessungszeitraums und dem nächsten Sendeimpuls. Diese Zeit wurde jedoch gewählt, um alle Ultraschallsignale, die durch Reflexionen an Gehäusewänden und anderen Gegenständen in der Fixierstation entstehen könnten und das gewünschte Meßergebnis verfälschen würden, abklingen zu lassen.

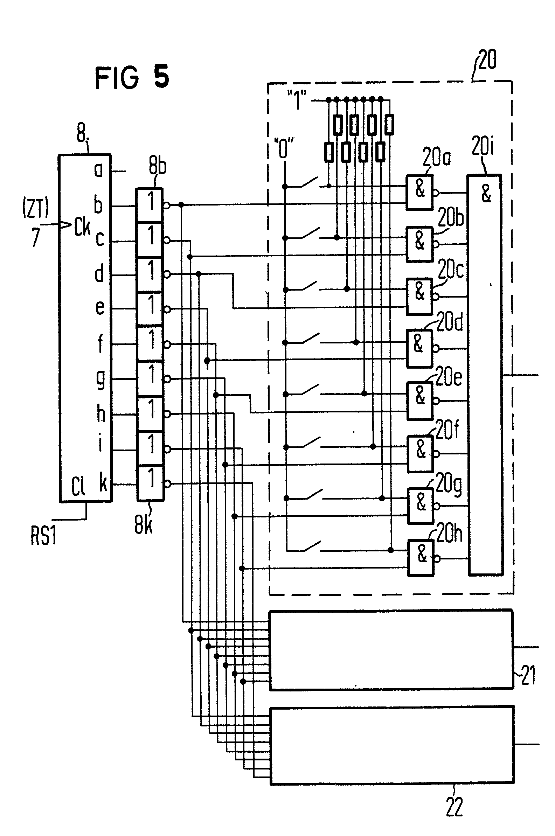

In Anwendungsfällen der Ultraschalleinrichtung, in denen aufgrund der vorliegenden Verhältnisse, insbesondere der Umweltbedingungen nicht mit Nachläufern der Empfangsimpulse gerechnet werden muß, kann die erwähnte Wartezeit zwischen dem Ende des Bewertungszeitraums und der Erzeugung eines neuen Sendeimpulses SI wesentlich verkürzt werden. In solchen Fällen kann es zweckmäßig sein, bei entsprechender Verringerung des Zählvolumens des Binärzählers 62 den Adressenumfang des Festwertspeichers 68 gleich dem Zählvolumen zu machen. Beginn und Ende eines Sendeimpulses und des Bewertungszeitraumes können dann auf einfache Weise durch Lesesignale aus dem Festwertspeicher 68 markiert werden. Ein entsprechendes Ausführungsbeispiel zeigt die Fig. 5. Die Eingänge des Schaltnetzes 64a sind mit entsprechenden Ausgängen des Festwertspeichers 68 verbunden. Das Schaltnetz 64a besteht aus zwei Kippschaltungen, die durch die Lesesignale aus dem Festwertspeicher 68 gesetzt bzw. zurückgesetzt werden. Beim Einsatz getakteter Kippschaltungen muß dem Schaltnetz 64a auch noch der Zähltakt ZT zugeführt werden.

Die Länge des Sendeimpulses und die Lage und Dauer des Bewertungszeitraums lassen sich ebenfalls durch eine Änderung des Speicherinhalts verändern.

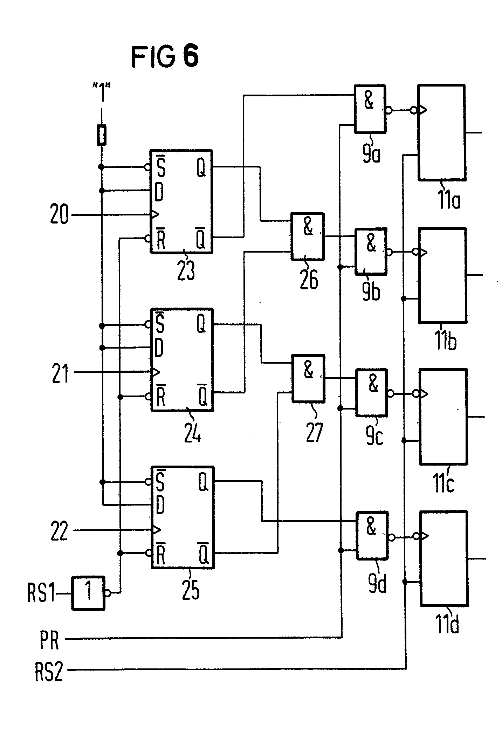

Ein an veränderte Bedingungen noch leichter anpassungsfähiges Ausführungsbeispiel für die Wähleinrichtung 10, das allerdings einen höheren Aufwand erfordert, ist in den Figuren 5 und 6 vereinfacht dargestellt. Dem Ausführungsbeispiel liegen die bereits beispielsweise genannten Zeitspannen, insbesondere für den Impulsabstand des Zähltaktes ZT und für die Dauer des Bewertungszeitraums zugrunde. Weiter wird vorausgesetzt, daß die Durchschaltung des Zähltaktes ZT auf den Eingang des Taktimpulszählers 8 nach Fig. 1 nur während des Bewertungszeitraums erfolgt.

In Fig. 5 sind die Ausgänge der Zählstufen des Taktimpulszählers 8, der im allgemeinen aus mehreren Zählerbausteinen besteht, mit a bis k bezeichnet, wobei der Ausgang a die niedrigste und der Ausgang k die höchste Wertigkeit hat. Den benützten Ausgängen b bis k sind Inverter 8b bis 8k nachgeschaltet. Der Impulseingang CK des Taktimpulszählers 8 ist im dem Ausgang des UND-Glieds 7 (vergl. Fig. 1) verbunden. Der Steuereingang CI dient zum Rücksetzen mit Hilfe des Rücksetzimpulses RS1.

Nach Fig. 5 sind drei Einstelleinheiten 20 bis 22 zur Einstellung der Grenzen zwischen den Bereichen für die Zählerstände bzw. für die Anwahl der einzelnen Zustandsspeicher vorgesehen. Die vorzugsweise gleich ausgebildeten Einstelleinheiten 20 bis 22 enthalten im Prinzip ebensoviele NAND-Glieder mit je zwei Eingängen wie Zählerausgänge benützt sind. Tatsächlich sind aber in der Einstelleinheit 20 zur Festlegung der Grenze zwischen dem ersten und zweiten Bereich aus technologischen Gründen nur 8 NAND-Glieder 20a bis 20h vorgesehen, mit der Folge, daß diese Grenze nur in der ersten Hälfte des Bewertungszeitraums liegen kann.

Die ersten Eingänge der NAND-Glieder 20a bis 20h sind über Widerstände mit einem der binären « 1 » entsprechenden Potential verbunden, sie können aber auch über Schalter oder Lötbrücken an ein « 0 »-Potential angelegt werden. Die zweiten Eingänge der NAND-Glieder 20a bis 20h sind an die Ausgänge der Inverter 8b bis 8k angeschlossen. Alle NAND-Glieder, deren erste Eingänge über geschlossene Schalter oder Lötbrücken mit dem « 0 »-Potential verbunden sind, geben an den Ausgängen unabhängig von den logischen Zuständen an den zweiten Eingängen eine binäre « 1 » ab. Die Ausgangssignale aller anderen NAND-Glieder entsprechen den Ausgangssignalen der betreffenden Zählstufen. Führen diese Zählstufen eine binäre « 1 », dann geben nunmehr alle NAND-Glieder 20a bis 20h eine binäre « 1 » ab und ein nachfolgendes UND-Glied 20i mit acht Eingängen spricht an. Durch die ansteigende Flanke des Ausgangssignals wird ein erstes D-Flip-Flop 23 in Fig. 6 gesetzt, wobei das Ausgangssignal des UND-Gliedes 20i die Eingabe einer an Dateneingang D als festes Potential anliegenden binären « 1 » in das Flip-Flop 23 bewirkt. Das bedeutet, daß die erste Bereichsgrenze, d. h. die Grenze zwischen dem ersten zweiten Bereich von Zählerständen mit dem zuletzt abgelaufenen Zählschritt erreicht wurde.

In entsprechender Weise werden ein zweites Flip-Flop 24 durch ein Ausgangssignal der Einstelleinheit 21 und ein drittes Flip-Flop 25 durch ein Ausgangssignal der Einstelleinheit 22 gesetzt, wenn die zugeordneten, durch Einstellung der betreffenden Einstelleinheit vorgegebenen Bereichsgrenzen auch tatsächlich erreicht wurden.

Da bei zweckdienlicher Einstellung der Einstelleinheiten 20 bis 22 das Setzen beispielsweise des dritten Flip-Flops 25 zwangsläufig voraussetzt, daß das erste Flip-Flop 23 und das zweite Flip-Flop 24 bereits gesetzt sind, muß verhindert werden, daß die Ausgangssignale des ersten und zweiten Flip-Flops 23 und 24 wirksam werden. Das geschieht mit Hilfe der beiden UND-Glieder 26 und 27, welche die Weitergabe des Ausgangssignals am Ausgang Q eines Flip-Flops immer von dem Zeitpunkt ab verhindern, indem das Flip-Flop des nächsthöheren Ranges gesetzt wird.

Für die Anwahl der Zustandsspeicher 11a bis 11d gelten daher folgende Bedingungen :

Zustandsspeicher 11a : Flip-Flop 23 nicht gesetzt,
Zustandsspeicher 11b : Flip-Flop 23 gesetzt,
Zustandsspeicher 11c : Flip-Flop 24 gesetzt,
Zustandsspeicher 11d : Flip-Flop 25 gesetzt.

Da das Setzen der Flip-Flops 23 bis 25 nur bei diskreten Zählerständen und damit nur zeitlich nacheinander erfolgen kann, muß die Weitergabe der Zählergebnisse an die Wähleinrichtung 10 nach Fig. 5 und 6 ständig geschehen und darf nicht erst nach Beendigung des Bewertungszeitraums erfolgen, wie dies der Übersichtsdarstellung nach Fig. 1 zu entnehmen ist und beispielsweise bei der schon beschriebenen Realisierung der Wähleinrichtung 10 durch einen programmierbaren Festwertspeicher gilt. Bei einer Wähleinrichtung nach Fig. 5 und 6 liegt ein für die Auswahl eines Zustandsspeichers maßgebender Endzustand nur an deren Ausgängen vor. Eine durch das Übergabesignal PR gesteuerte Torsteueranordnung, bestehend aus den NAND-Gliedern 9a bis 9d, ist daher zwischen der Wähleinrichtung 10 und den Zustandsspeichern 11a bis 11d vorgesehen.

Die Tatsache, daß bei Verwendung der vorstehend beschriebenen Auswertelogik bestimmte Reaktionen, wie die Nachlieferung von Lösungsmittel zur Erhöhung der Dampfkonzentration oder das Abschalten des Druck- bzw. Kopiergeräts nicht aufgrund einer Einzelmessung erfolgt, sondern von dem überwiegenden Ergebnis einer Vielzahl von Messungen abhängig gemacht wird, verringert die Wahrscheinlichkeit, daß die Ursachen für solche Reaktionen durch die eingangs genannten Störeinflüsse nur vorgetäuscht und die Reaktionen selbst daher falsch sind, ganz erheblich. Indessen kann auch damit die Einleitung falscher Reaktionen noch nicht ganz ausgeschlossen werden, wenn zur Messung der Dampfkonzentration eine Ultraschall-Meßsonde verwendet wird, die gegen die Störeinflüsse ungeschützt ist.

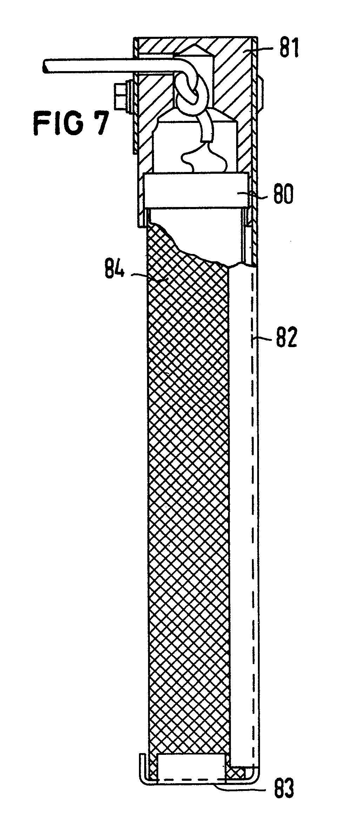

Eine Meßsonde, die aufgrund ihrer Ausbildung einen wesentlichen Beitrag zum störungsfreien Betrieb der Einrichtung zur Bestimmung der Lösungsmitteldampfkonzentration leistet, wird im folgenden anhand der Fig. 7 näher beschrieben.

Ein Ultraschallwandler 80 ist in einem Gehäuse 81 aus einem formbeständigen, schwingungsdämpfenden Kunststoff so gelagert, daß eine möglichst geringe akustische Kopplung zwischen dem Wandler und weiteren, am Gehäuse 81 befestigten Teilen besteht. Hierbei handelt es sich insbesondere um eine in Fig. 7 nicht dargestellte Befestigungsvorrichtung für die Meßsonde und um einen im wesentlichen U-förmigen Bügel 82, der am anderen Ende rechtwinklig abgebogen ist. Das abgebogene Stück bildet eine Reflektorplatte 83, an der die vom Ultraschallwandler 80 abgestrahlten Ultraschallwellen reflektiert werden und wieder zum Ultraschallwandler zurückwandern. Der Abstand zwischen dem Ultraschallwandler 80 und dem Reflektor 83 beträgt beispielsweise 150 mm und definiert die Meßstrecke, die von den Ultraschallsignalen zweimal durchlaufen wird.

Die gesamte Meßstrecke ist von einem Siebrohr 84 aus einem feinmaschigen Netz umgeben. In einer bevorzugten Ausführung besteht das Netz aus Drähten mit einem Durchmesser von etwa 0,06 mm, die so miteinander verwebt sind, daß sich eine offene Siebfläche von ca. 40 % ergibt. Dieser Wert ist ein Kompromiß, um zu erreichen, daß einerseits die Dampfkonzentration im Inneren des Siebrohres 84 ausreichend rasch Veränderungen der durchschnittlichen Konzentration im Außenraum folgt und andererseits der Innenraum vor kurzzeitigen und örtlich begrenzten Konzentrationsschwankungen möglichst gut abgeschirmt wird. Durch eine Beugung des Schallfeldes in der Meßstrecke verursachte Interferenzerscheinungen sind dann kaum mehr zu beobachten. Zudem blendet das Siebrohr 84 Falschechosignale aus der Umgebung weitgehend aus.

## Ansprüche

1. Einrichtung zur Überwachung der Konzentration eines Luft-Dampf-Gemisches bei einem Druck- oder Kopiergerät, insbesondere zur Überwachung der Konzentration von Lösungsmitteldampf in der Fixierstation eines nichtmechanischen Druck- oder Kopiergerätes, mit einer einen elektroakustischen Wandler und einen Reflektor enthaltenden Meßsonde zur Umwandlung eines elektrischen Sendeimpulses in ein Ultraschallsignal und zur Umwandlung des an dem Reflektor reflektierten Ultraschallsignals in einen elektrischen Empfangsimpuls, mit einer Generatorschaltung zur Erzeugung eines Zähltaktes und zur periodischen Aussendung des Sendeimpulses und mit einem Taktimpulszähler zur Zählung der zwischen dem Beginn eines Sendeimpulses und dem Beginn eines zugehörigen Empfangsimpulses aufgelaufenen Taktimpulse, gekennzeichnet durch folgende Merkmale :

a) Es ist eine Gruppe mit mindestens drei Zustandsspeichern (11a bis 11d) mit bestimmten, vorzugsweise gleichen Speicherkapazitäten vorgesehen,

b) jeder Zustandsspeicher der Gruppe (11a bis 11d) wird durch eine Wähleinrichtung (10) individuell angewählt, die jeweils einen Bereich von Zählerständen des Taktimpulszählers (8) gleich bewertet,

c) jede Anwahl verringert die Restkapazität des angewählten Zustandsspeichers um eine Einheit,

d) der Zustandsspeicher der Gruppe von Zustandsspeichern (11a bis 11d), dessen Kapazität zuerst erschöpft ist, liefert ein einem vorgegebenen Bereich der Dampfkonzentration zugeordnetes Ausgangssignal, das die Löschung der Inhalte aller Zustandsspeicher (11a bis 11d, 13) und eine bestimmte Reaktion bezüglich des Betriebs des Druck- oder Kopiergerätes bewirkt.

2. Einrichtung nach Anspruch 1, dadurch gekennzeichnet, daß ein weiterer Zustandsspeicher (13) vorgesehen ist, der angewählt wird, wenn am Ende eines vorgegebenen Bewertungszeitraumes kein Empfangsimpuls (EI) eingetroffen ist.

3. Einrichtung nach Anspruch 2, dadurch gekennzeichnet, daß die Zustandsspeicher (11a bis 11d, 13) als Zähler ausgebildet sind und jede Anwahl den Zählerstand um eine Einheit erhöht.

4. Einrichtung nach einem der vorhergehenden Ansprüche, gekennzeichnet durch die Wähleinrichtung (10) aus einem Festwertspeicher (68), dessen Adresseneingänge mit den Ausgängen von Zählstufen eines Binärzählers (62) verbunden sind und dessen während der Bewertungszeit aufgerufene Adressen in mindestens drei Bereiche mit fortlaufenden Adressen eingeteilt sind, wobei die vom Festwertspeicher (68) ausgegebenen Informationen jeweils innerhalb der Bereiche identisch, sonst jedoch verschieden sind, einem Register (72) zur durch den Empfangsimpuls (EI) ausgelösten Übernahme der an den Empfangsimpuls (EI) ausgelösten Übernahme der an den Ausgängen des Festwertspeichers (68) anliegenden Informationen.

5. Einrichtung nach Anspruch 4, dadurch gekennzeichnet, daß der Empfangsimpuls (EI) mit dem Zähltakt (ZT) synchronisiert wird, derart, daß die Übernahme der an den Ausgängen (D1' bis D3') des Festwertspeichers (68) anliegenden Information in das Register (72) synchron zum Zähltakt (ZT) erfolgt.

6. Einrichtung nach Anspruch 4 oder 5, dadurch gekennzeichnet, daß die Adresseneingänge des Festwertspeichers (68) mit den Ausgängen der Zählstufen des Binärzählers (62) der jeweils nächsthöheren Wertigkeit entsprechend verbunden sind.

7. Einrichtung nach Anspruch 6, dadurch gekennzeichnet, daß der Adressenumfang des Festwertspeichers (68) und der Bewertungszeitraum für die Empfangsimpulse (EI) so festgelegt sind, daß alle Adressen vor Beginn des Bewertungszeitraums gegebenenfalls mehrfach, jedoch während des Bewertungszeitraumes höchstens einmal aufgerufen werden.

8. Einrichtung nach Anspruch 6, dadurch gekennzeichnet, daß der Adressenumfang des Festwertspeichers (68) so bemessen ist, daß die höchste Adresse einem Zählerstand entspricht, der größer oder gleich dem Zählerstand ist, der das Rücksetzen des den Bewertungszeitraum für die Empfangsimpulse (EI) bestimmenden Steuersignals (BW) bewirkt.

9. Einrichtung nach einem der Ansprüche 4 bis 8, dadurch gekennzeichnet, daß ein mit den Ausgängen von Zählerstufen des Binärzählers (62) verbundenes Schaltnetz (64) vorgesehen ist, das den mehrere Perioden der Ultraschallschwingung andauernden Sendeimpuls (SI) und ein Steuersignal (BW) zur Steuerung einer Torschaltung (66, 6) für den Empfangsimpuls (EI) erzeugt.

10. Einrichtung nach einem der Ansprüche 1 bis 3, dadurch gekennzeichnet, daß die Wähleinrichtung (10) mindestens zwei Einstelleinheiten (20, 21, 22) zur einstellbaren Festlegung der Grenzen zwischen den Bereichen von Zählerständen aufweist, mit je einer mit den Stufenausgängen des Taktimpulszählers (8) verbundenen Koinzidenzschaltung, die ein Ausgangssignal erzeugt bei Koinzidenz aller entsprechend der Einstellung berücksichtigten Ausgangssignale des Taktimpulszählers (8), daß mindestens zwei Flip-Flops (23, 24, 25) vorgesehen sind, die durch die Ausgangssignale der Koinzidenzschaltungen nacheinander beim Erreichen einer ersten, zweiten und gegebenenfalls einer weiteren Bereichsgrenze gesetzt werden, daß der Zustand der Flip-Flops (23, 24, 25) nach Beendigung eines vorgegebenen Bewertungszeitraums zwecks Erzeugung eines Wählsignals abgetastet wird, wobei eine Verriegelungsschaltung bewirkt, daß entweder das inverse Signal des nicht gesetzten ersten Flip-Flops (23) oder das wahre Ausgangssignal des der höchsten erreichten Bereichsgrenze zugeordneten Flip-Flops maßgebend ist.

11. Einrichtung nach einem der Ansprüche 1 bis 10, dadurch gekennzeichnet, daß die zwischen dem elektroakustischen Wandler (80) und dem Reflektor (83) der Meßsonde befindliche Ultraschall-Meßstrecke von einem feinmaschigen, vorzugsweise zylinderförmigen Netz (84) umgeben ist, dessen Maschenweite wesentlich kleiner als die Wellenlänge der Ultraschallschwingung ist.

## Claims

1. Device for controlling the concentration of an air-vapour mixture in a printing or copying apparatus, in particular for controlling the concentration of solvent vapour in the fixing station of a non-mechanical printing or copying apparatus, having a measuring probe which contains an electro-acoustic transducer and a reflector for converting an electrical transmission pulse into an ultrasonic signal and for the conversion of the ultrasonic signal reflected back by the reflector into an electrical receiving pulse, having a generator circuit for the production of a counting pulse and for the periodic transmission of the transmission pulses, and having a clock pulse counter for counting the clock pulses occuring between the beginning of a transmission pulse and the beginning of an assigned receiving pulse, characterised by the following features :

a) a group with at least three condition stores (11a to 11d) having specific, preferably identical storage capacities provided,

b) each condition store of the group (11a to 11d) is individually dialled by a dialling device (10) which in each case evaluates a region of counter readings of the clock pulse counter (8) in the same fashion,

c) each dialling operation reduces the residual capacity of the dialled condition store by one unit,

d) the condition store of the group of condition stores (11a to 11d), whose capacity is first exhausted supplies an output signal which is assigned to a predetermined region of the vapour concentration and effects the cancellation of the contents of all condition stores (11a to 11d, 13) and a specific reaction in respect of the operation of the printing or copying apparatus.

2. A device as claimed in Claim 1, characterised in that there is provided a further condition store (13) which is dialled if no receiving pulse (EI) has arrived at the end of a predetermined evaluation period.

3. A device as claimed in Claim 2, characterised in that the condition stores (11a to 11d, 13) are counters and each dialling operation increases the counter reading by one unit.

4. A device as claimed in one of the preceding Claims, characterised by the dialling device (10) consisting of a read-only memory (68) whose address inputs are connected to the outputs of counting stages of a binary counter (62) and whose addresses which are called up during the evaluation period, are divided into at least three regions with continuous addresses, where the items of information emitted by the read-only memory (68) are respectively identical within the regions, otherwise different, a register (72) for the transfer of the items of information present at the outputs of the read-only memory (68) being triggered by the receiving pulse (EI).

5. A device as claimed in Claim 4, characterised in that the receiving pulse (EI) is synchronized with the counting clock pulse (ZT) in such a manner that the transfer of the items of information present at the outputs (D1' to D3') of the read-only memory (68) into the register (72) is effected synchronously with the counting clock pulse (ZT).

6. A device as claimed in Claim 4 or 5, characterised in that the address inputs of the read-only memory (68) are accordingly connected to the outputs of the counting stages of the binary counter (62) of the respectively next higher valence.

7. A device as claimed in Claim 6, characterised in that the address length of the read-only store (68) and of the evaluation period for the receiving pulses (EI) is determined to be such that before the beginning of the evaluation period all addresses are possibly called up several times, but only once at the most during the evaluation period.

8. A device as claimed in Claim 6, characterised in that the address length of the read-only memory is dimensioned to be such that the highest address corresponds to a counter reading which is greater than or identical to the counter reading which effects resetting of the control signal (BW) which determines the evaluation period for receiving pulses (EI).

9. A device as claimed in one of Claims 4 to 8, characterised in that there is provided a switching network (64) which is connected to the outputs of counter stages of the binary counter (62) and which produces the transmission pulse (SI), which lasts for several periods of the ultrasonic oscillation, and a control signal (BW) for controlling a gate circuit (66, 6) for the receiving pulse (EI).

10. A device as claimed in one of Claims 1 to 3, characterised in that the dialling device (10) has at least two setting units (20, 21, 22) for the adjustable determination of the boundaries between the regions of counter readings, each of which has a coincidence circuit which is connected to the stage outputs of the clock pulse counter (8) and which produces an output signal in the event of coincidence of all output signals of the clock pulse counter (8) which are considered in accordance with the adjustment, that there are provided at least two flip-flops (23, 24, 25) which when reaching a first, second and possibly a further region boundary are consecutively set by the output signals of the coincidence circuits, that the state of the flip-flops (23, 24, 25) is scanned in order to produce a dialling signal after the termination of a predetermined evaluation period, where a locking circuit ensures that either the inverse signal of the unset first flip-flop (23) or the true output signal of the flip-flop assigned to the highest region boundary, is decisive.

11. A device as claimed in one of Claims 1 to 10, characterised in that the ultrasonic measuring path, which is present between the electro-acoustic transducer (80) and the reflector (83) of the measuring probe, is surrounded by a finemeshed, preferably cylindrical network (84), whose mesh size is substantially smaller than the wavelength of the ultrasonic oscillation.

**Revendications**

1. Dispositif pour le contrôle de la concentration d'un mélange air-vapeur dans un appareil d'impression ou de reprographie, en particulier, pour le contrôle de la concentration de la vapeur de solvant dans le poste de fixage d'un appareil d'impression ou de reprographie non mécanique, comportant une sonde de mesure pourvue d'un transducteur électro-acoustique et d'un réflecteur, en vue de convertir une impulsion d'émission électrique en un signal ultra-sonore et pour convertir le signal ultra-sonore réfléchi au niveau du réflecteur en un signal de réception électrique, ainsi qu'un circuit générateur pour produire une cadence de comptage et pour l'émission périodique de l'impulsion d'émission, et un compteur d'impulsions de cadence pour compter les impulsions de cadence entre le début d'une impulsion d'émission et le début d'une impulsion de réception associée, caractérisé par les moyens suivants :

a) il est prévu un groupe avec au moins deux mémoires d'états (11a à 11d) avec des capacités de mémorisation déterminées, de préférence identiques,

b) chaque mémoire d'états du groupe (11a à 11d) est sélectionnée individuellement par un dispositif de sélection (10) qui évalue de façon identique une zone respective d'états de comptage du compteur d'impulsions de cadence (8),

c) chaque sélection réduit d'une unité la capacité résiduelle de la mémoire d'états sélectionnée,

d) la mémoire d'états du groupe de mémoires d'états (11a à 11d) dont la capacité est épuisée en premier lieu, fournit un signal de sortie qui est associé à une zone prédéterminée de la concentration de vapeur, lequel signal provoque l'effacement du contenu de toutes les mémoires d'états (11a, 11d, 13) et une réaction déterminée pour ce qui concerne le fonctionnement de l'appareil d'impression ou de reprographie.

2. Dispositif selon la revendication 1, caractérisé par le fait qu'il est prévu une mémoire d'états supplémentaire (13), qui est sélectionnée si à la fin d'un intervalle prédéterminé d'évaluation, aucune impulsion de réception (EI) ne s'est pas présentée.

3. Dispositif selon la revendication 2, caractérisé par le fait que les mémoires d'états (11a à 11d, 13) sont réalisées sous la forme de compteurs et chaque sélection augmente l'état de comptage d'une unité.

4. Dispositif selon l'une des revendications précédentes, caractérisé par un dispositif de sélection (10) constitué par une mémoire morte (68) dont les entrées d'adresses sont reliées aux sorties des étages de comptage d'un compteur binaire (62) et dont les adresses qui sont appelées pendant une durée d'évaluation sont subdivisées en trois zones à adresses continues, les informations fournies par la mémoire morte (68) étant respectivement identiques dans chaque zone, mais autrement différentes, et par un registre (72) pour la prise en charge, déclenchée par l'impulsion de réception (EI), des informations présentes aux sorties de la mémoire morte (68).

5. Dispositif selon la revendication 4, caractérisé par le fait que l'impulsion de réception (EI) est synchronisée avec la cadence de comptage (ZT), que la prise en charge, dans le registre (72), des informations qui sont présentes au niveau des sorties (D1' à D3') de la mémoire morte (68) a lieu de façon synchrone avec la cadence de comptage (ZT).

6. Dispositif selon la revendication 4 ou 5, caractérisé par le fait que les entrées d'adresses de la mémoire morte (68), sont reliées aux sorties des étages de comptage du compteur binaire (62) de valeur significative suivante la plus élevée.

7. Dispositif selon la revendication 6, caractérisé par le fait que la capacité d'adresses de la mémoire morte (68) et la durée d'évaluation pour les impulsions de réception (EI) sont déterminées de telle façon que toutes les adresses sont appelées, avant le début de la durée d'évaluation, éventuellement à plusieurs reprises, mais, pendant la durée d'évaluation, une fois au plus.

8. Dispositif selon la revendication 6, caractérisé par le fait que la capacité d'adresses de la mémoire morte (68) est dimensionnée de telle façon que l'adresse la plus haute correspond à un état de comptage qui est supérieur ou égal à l'état de comptage qui provoque la remise à l'état initial du signal de commande (BW) qui détermine la durée d'évaluation pour les impulsions de réception (EI).

9. Dispositif selon l'une des revendications 4 à 8, caractérisé par le fait qu'il est prévu un réseau de commutation (64) qui est relié aux sorties d'étages de comptage du compteur binaire (62), réseau de commutation qui produit l'impulsion d'émission (SI) qui dure plusieurs périodes de l'oscillation ultrasonore, et un signal de commande (BW) servant à la commande d'un circuit de porte (68, 6) pour l'impulsion de réception (EI).

10. Dispositif selon l'une des revendications 1 à 3, caractérisé par le fait que le dispositif de sélection (10) comporte au moins deux unités de réglage (20, 21, 22) servant à déterminer de façon réglable les limites entre les zones d'états de comptage, avec respectivement un circuit ET relié aux sorties des étages du compteur d'impulsion de cadence (8), circuit ET qui produit un signal de sortie lors de la coïncidence de tous les signaux de sortie du compteur d'impulsions de cadence (8) dont on tient compte en fonction du réglage, qu'au moins deux multivibrateurs bistables (23, 24, 25) sont prévus, lesquels sont activés successivement par les signaux de sortie des circuits ET, lorsqu'est atteinte une première, une seconde et éventuellement une troisième limite de zone, que l'état des multivibrateurs bistables (23, 24, 25) est détecté après une durée d'évaluation prédéterminée en vue de produire un signal de sélection, un circuit de verrouillage faisant en sorte que soit le signal inverse du premier multivibrateur bistable (23) non activé ou le vrai signal de sortie du multivibrateur bistable qui est associé à la limite de zone la plus haute atteinte, soit déterminante.

11. Dispositif selon l'une des revendications 1 à 10, caractérisé par le fait que la voie de mesure ultra-sonore qui se situe entre le transducteur électro-acoustique (80) et le réflecteur (83) de la sonde de mesure, est de préférence entourée par un filet cylindrique (84) dont l'ouverture des mailles est notablement inférieure à la longueur d'onde de l'oscillation ultra-sonore.

FIG 1

0 062 104

FIG **2**

**FIG 3**

**FIG 4**

# FIG 5

# FIG **6**

FIG 7